Europäisches Patentamt

European Patent Office

Office européen des brevets

(11) Publication number: **0 007 432**
**B1**

# (12) EUROPEAN PATENT SPECIFICATION

(45) Date of publication of patent specification: **28.11.84**

(21) Application number: **79102003.5**

(22) Date of filing: **18.06.79**

(51) Int. Cl.³: **A 42 B 3/00**, G 02 B 27/00

(54) **Rear-view device incorporatable in helmets and the like.**

(30) Priority: **06.07.78 FR 7820168**

(43) Date of publication of application:
**06.02.80 Bulletin 80/03**

(45) Publication of the grant of the patent:
**28.11.84 Bulletin 84/48**

(84) Designated Contracting States:
**AT BE CH DE GB IT LU NL SE**

(56) References cited:
DE-A-2 021 288
DE-A-2 730 635
FR-A-1 062 289
FR-A-1 291 711
FR-A-2 303 493
GB-A-1 527 049
US-A-3 446 916
US-A-3 833 300
US-A-3 985 424

(73) Proprietor: **Picquet, Lambert**
**4 Square de l'avenue du Bois**
**F-75116 Paris (FR)**

(73) Proprietor: **Picquet, Jean Marie**
**4 Square de l'avenue du Bois**
**F-75116 Paris (FR)**

(73) Proprietor: **Cuvillier, Roger**
**4 Square de l'avenue du Bois**
**F-75116 Paris (FR)**

(72) Inventor: **Picquet, Lambert**
**4 Square de l'avenue du Bois**
**F-75116 Paris (FR)**
Inventor: **Picquet, Jean Marie**
**4 Square de l'avenue du Bois**
**F-75116 Paris (FR)**
Inventor: **Cuvillier, Roger**
**4 Square de l'avenue du Bois**
**F-75116 Paris (FR)**

(74) Representative: **Monti, Rinaldo et al**
**Ufficio Internazionale Brevetti Ing.C.Gregorj Via**
**Dogana 1**
**I-20100 Milan (IT)**

Courier Press, Leamington Spa, England.

## Description

The present invention relates to a rearview device for incorporation in helmets and the like, for example in protective helmets used by motorcyclists and for sports in general, with particular reference, but without any limitation, to protective helmets. The increase in road traffic presently requires all vehicle drivers when undertaking a manoeuvre, e.g. when turning or overtaking, to locate exactly all the vehicles that follow or precede.

In the case of enclosed vehicles, rearview mirrors applied inside the vehicle enable the driver, by means of a slight inclination of the head, to explore rearwards a field covering an angle of about 30° and to observe the vehicles in the field of vision. Generally these rearview mirrors are complemented by a second rearview mirror, applied externally of the vehicle, the field of which completes that of the first rearview mirror, permitting the driver to "follow", for a few instants, the vehicles that are overtaking him.

Besides these various advantages, such devices present, however, some inconveniences, i.e.:
— their field of view is fixed and is dependent on the direction of movement of the vehicle;
— the protrusion of the external rearview mirror makes this a fragile and dangerous accessory;
— the observation through the rearview mirror demands an inclination of the head with consequent momentary distraction of attention from the objects situated in front of the driver.

In the case of two-wheeled vehicles, e.g. motorcycles, the rearview mirror is fixed to the handlebars, whereby all the inconveniences cited hereabove occur.

It has already been proposed to overcome these inconveniences by providing helmets incorporating or having mounted thereon an optical system for receiving light from an object to the rear of the wearer and forming an image of the object within the direct field of view of the wearer (see, for example, DE—A—2021288, FR—A—2303493, FR—A—12911711 and FR—A—1062289). FR—A—2303493 uses a system, which may be binocular, of plane or curved mirrors mounted on a framework or box attached to the helmet. In FR—A—12911711 the optical system is formed integral with the helmet and consists of a system of plane mirrors receiving light from the object via a window, in the rear of the helmet, which may be in the form of a biconcave lens to increase the field of view. The arrangement of FR—A—1062289 uses the combination of a biconvex lens directed towards the object and a pair of plane or curved mirrors directing the light from the lens to the eye.

According to the present invention there is provided a rearview device for a headpiece, which device comprises an optical system, mountable in or on the headpiece for receiving light from an object to the rear of the wearer and forming an image of said object within the field of view of the wearer of the headpiece characterized in that the optical system comprises:

(a) an objective lens which in use is directed rearwardly of the wearer and forms an inverted laterally inverted image of the object,

(b) laterally and vertically inverting reflector means constituted by the combination of a plane mirror and two plane reflectors disposed perpendicular to each other and meeting in a line which lies in a vertical plane substantially parallel to and spaced from a plane in which the optical axis of the objective lens lies, and

(c) an eyepiece lens located between the plane mirror and the two plane reflectors,

whereby the wearer sees an image of the object which is erect and without lateral inversion.

For a better understanding of the invention, and to show how the same may be carried into effect, reference will now be made, by way of example to the accompanying drawings in which:

Figure 1 shows a side view, partly in elevation and partly in section, of a first helmet provided with a rearview device;

Figure 2 shows a view similar to Figure 1 of a second helmet provided with a rearview device;

Figure 3 shows the path of light rays through a part of the rearview device.

In the various figures of the drawings, like components are provided with like reference characters.

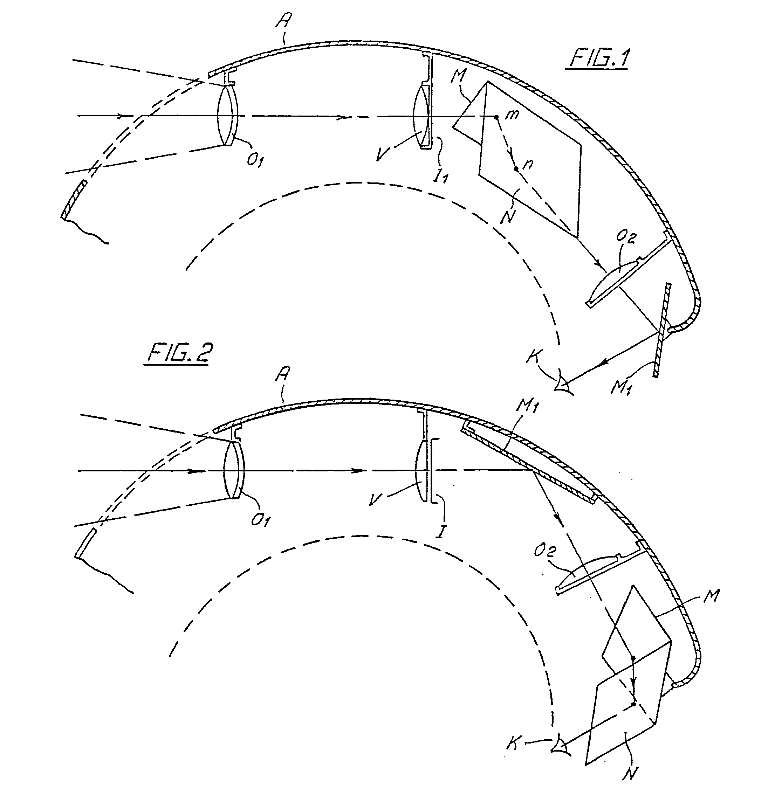

Each of Figures 1 and 2 illustrates the outer shell of a helmet A, for example a motorcyclist's safety helmet. The helmet A is formed near the top thereof with an aperture directed towards the rear of the helmet. Mounted inside the helmet, in the space available between the wearer's head (shown in dashed lines) and the shell, is a rearview device.

Each of the rearview devices comprises an objective lens $O_1$ which is supported with its optical axis substantially horizontal and is arranged to receive light from a distant object (not shown) to the rear of the of the wearer of the helmet and to form an image $I_1$ of that object, and an eyepiece lens $O_2$ which enables the wearer of the helmet to view the image $I_1$ (or an image thereof).

In the case of Figure 1, the objective lens forms at its focal plane a laterally and vertically inverted image $I_1$ of a distant object. The field lens V is placed at the focal plane of the lens $O_1$. The objective lens $O_1$ and the field lens V are geometrically coaxial, the common axis of the lenses lying in a vertical plane which bisects the helmet in the front and rear direction. Immediately downstream of the field lens V is a pair of plane mirrors M, N disposed at right angles to each other and meeting in a line which lies in a plane parallel to the vertical plane containing the common axes of the objective $O_1$ and the field lens V, and spaced therefrom by a distance equal to $\frac{1}{4}$ the normal distance between the optical axes of the eyes. The mirrors M, N thus result in the optical axis of the system downstream of the mirrors being displaced laterally from the aforesaid vertical plane by a distance equal to half the normal distance between the optical axes of the eyes, and therefore, assuming that the vertical plane containing the axes of the objective $O_1$ and the field lens V lies halfway between the optical axes of the eyes, the vertical plane containing the optical axis of the system downstream of the mirrors M, N also contains the optical axis of one of the eyes.

The light beam entering the optical system by way of the objective $O_1$ and reflected by the mirrors M, N passes through the eyepiece $O_2$ and is reflected by the mirror $M_1$ into the eye of the wearer of the helmet. The wearer thus views the image $I_1$. The image as viewed is laterally inverted by the mirrors M, N and is vertically inverted by the mirror $M_1$. Since the image $I_1$ is itself laterally and vertically inverted with respect to the object, the image as viewed by the wearer is erect and without lateral inversion.

The optical system shown in Figure 2 is similar to that of Figure 1, except that the positions of the mirror $M_1$ and the mirrors M, N are interchanged, with the result that vertical inversion of the image $I_1$ takes place upstream of the eyepiece $O_2$ and lateral inversion of the image and lateral displacement of the optical axis of the system take place downstream of the eyepiece $O_2$. The planes of the mirros M, N meet in a line which is tilted slightly forwards at the top, as seen in Fig. 2, but lies in a vertical plane which extends parallel to the optical axis of the objective $O_1$.

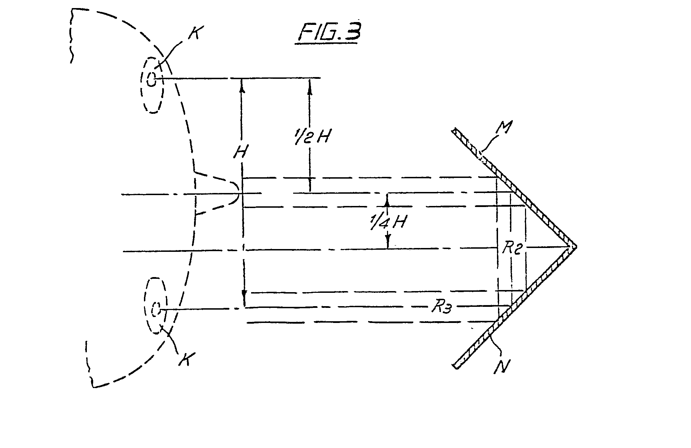

Figure 3 illustrates the manner in which the mirrors M, N bring about lateral inversion of a light beam incident thereon and lateral displacement of the axis of the beam.

The rearview device presents supporting means which may be fitted to the helmet and which support, in the rear part of the helmet, an objective lens the optical axis of which is generally horizontal, and in the front part, at least an eyepiece, and has means to optically connect the objective and the eyepiece so as to permit the vision of the rear objects.

In the described helmets, the objective is located in the upper part of the helmet, but it may alternatively be located on one of the side walls of the helmet. The eyepiece is fitted in the front part of the helmet and, obviously, in such a position as to be seen by the eye of the driver.

The optical system of the rearview device has the following characterics:

— the final image observed by the driver through the eyepiece is a "true" one, i.e. the top and bottom, the right and left hand side of the rear object, as seen in the field of view of the eyepiece are maintained;

— the optical system, which generally follows a profile corresponding to that of the helmet to which the rearview device is connected, is made in such a manner that the elements of said rearview may be easily fitted in the helmet.

Since the field of the objective $O_1$ is large (e.g. about 30°), the field lens V is provided in order to concentrate the light from the objective on the eyepiece, thus allowing observation of the entire field.

In the device shown in Figure 1, the focal length of the objective $O_1$ is, for example, 70 mm, so as to form an image having a diameter of about 25 mm.

Downstream of field lens V, the optical axis is deviated downstream by about 70° by means of the mirrors M, N described above, which ensure also the lateral reversal of the image which is directly observed by means of the eyepiece $O_2$. The optical axis is also deviated by means of the mirror $M_1$ to bring it close to the normal vision axis of the driver.

The rearview devices of either described type may be duplicated in order to obtain two parallel optical axes which are 65 mm apart, at the output end, this corresponding to the average distance between the eyes K, of a human, thus ensuring a binocular and stereoscopic vision of the image observed.

Needless to say, the rearview devices as described and illustrated hereabove may be modified and adapted with particular reference to the type of helmet to which said rearview device is being applied.

## Claims

1. A rearview device for a headpiece, said device comprising an optical system, mountable in or on the headpiece for receiving light from an object to the rear of the wearer and forming an image of said object within the field of view of the wearer of the headpiece characterized in that the optical system comprises

(a) an objective lens which in use is directed rearwardly of the wearer and forms an inverted image of the object,

(b) laterally and vertically inverting reflector means constituted by the combination of a plane mirror and two plane reflectors disposed perpendicular to each other and meeting in a line which lies in a vertical plane substantially parallel to and spaced from a plane in which the optical axis of the objective lens lies, and

(c) an eyepiece lens located between the plane mirror and the two plane reflectors,

whereby the wearer sees an image of the object which is erect and without lateral inversion.

2. A rearview device as claimed in claim 1, wherein the optical axis of the eyepiece lens lies in a plane parallel to and spaced from the plane in which the optical axis of the objective lens lies, and said line lies in a plane which is substantially parallel to and substantially equidistant from the respective planes of the optical axes of the eyepiece lens and the objective lens.

3. A rearview device as claimed in claim 1, wherein said two plane reflectors are disposed in the light path between the objective lens and the eyepiece lens.

4. A rearview device as claimed in claim 1, wherein said two plane reflectors are disposed in the light path downstream of the eyepiece lens.

5. A rearview device as claimed in claim 2 or 4, wherein the plane mirror is disposed in the light path between the objective lens and the eyepiece lens.

6. A rearview device as claimed in claim 2 or 3, wherein the plane mirror is disposed in the light path downstream of the eyepiece lens.

7. A rearview device according to one or more of claims 1 to 6 mounted in a protective helmet e.g. for a motorcyclist.

## Revendications

1. Dispositif rétroviseur pour coiffure, ce dispositif comprenant un système optique, destiné à être monté sur ou dans la coiffure pour recevoir de la lumière d'un objet situé à l'arrière du porteur de la coiffure et formant une image dudit objet dans le champ de vision du porteur, caractérisé en ce que le système optique comprend:

(a) une lentille objectif qui, en utilisation, est dirigée vers l'arrière du porteur et forme une image renversée de l'objet,

(b) des moyens réfléchissants, à inversion latérale et verticale, constitués par la combinaison d'un miroir plan et de deux réflecteurs plans disposés perpendiculairement l'un par rapport à l'autre et se rencontrant sur une ligne qui est située dans un plan vertical pratiquement parallèle à et écarté d'un plan dans lequel passe l'axe optique de la lentille objectif, et

(c) une lentille oculaire située entre le miroir plan et les deux réflecteurs plans,

ce grâce à quoi le porteur voit une image de l'objet qui est droite et sans inversion latérale.

2. Dispositif rétroviseur selon la revendication 1, dans lequel l'axe optique de la lentille oculaire se trouve dans un plan parallèle au et écarté du plan dans lequel passe l'axe optique de la lentille objectif et ladite ligne est située dans un plan qui est pratiquement parallèle aux et pratiquement équidistant des plans respectifs des axes optiques de la lentille oculaire et de la lentille objectif.

3. Dispositif rétroviseur selon la revendication 1, dans lequel les deux réflecteurs plans sont disposés sur le trajet lumineux entre la lentille objectif et la lentille oculaire.

4. Dispositif rétroviseur selon la revendication 1, dans lequel les deux réflecteurs plans sont disposés sur le trajet lumineux en aval de la lentille oculaire.

5. Dispositif rétroviseur selon la revendication 2 ou 4, dans lequel le miroir plan est disposé sur le trajet lumineux entre la lentille objectif et la lentille oculaire.

6. Dispositif rétroviseur selon la revendication 2 ou 3, dans lequel le miroir plan est disposé sur le trajet lumineux en aval de la lentille oculaire.

7. Dispositif rétroviseur selon l'une ou plusieurs des revendications 1 à 6, monté sur un casque protecteur, par exemple pour motocyclistes.

## Patentansprüche

1. Rückblickvorrichtung für eine Kopfbedeckung mit einem an oder in der Kopfbedeckung angeordneten optischen System zur Aufnahme des von dem Objekt ausgehenden Lichts zur Rückseite des Trägers unter Bildung eines Bildes des Objekts innerhalb des Sichtfelds des Trägers der Kopfbedeckung, dadurch gekennzeichnet, daß das optische System folgende Elemente aufweist:

a) eine im Gebrauch rückwärts vom Träger gerichtete und ein umgekehrtes Bild des Objetks liefernde Objektivlinse,

b) seitliche und vertikale Umkehrreflektoren, bestehend aus der Kombination eines Planspiegels und zwei Planreflektoren, die senkrecht zueinander angeordnet sind und in einer Linie aufeinandertreffen, die in einer vertikalen Ebene, etwa parallel und in Abstand von der die optische Achse der Objektivlinse aufweisenden Ebene liegt und

c) eine zwischen dem Planspiegel und den beiden Planreflektoren angeordnete Okularlinse,

wobei der Träger ein Bild des Objektes wahrnimmt, welches aufrecht steht und keine seitliche Umkehrung aufweist.

2. Rückblickvorrichtung nach Anspruch 1, dadurch gekennzeichnet, daß die optische Achse der Okularlinse in einer Ebene liegt, die sich parallel und in Abstand von der Ebene befindet, in welcher die optische Achse der Objektivlinse liegt und daß diese Linie in einer Ebene liegt, die etwa parallel und etwa äquidistant zu den Ebenen der optischen Achsen der Okularlinse und der Objektivlinse verläuft.

3. Rückblickvorrichtung nach Anspruch 1, dadurch gekennzeichnet, daß die beiden Planreflektoren in dem Strahlenweg zwischen der Objektivlinse und der Okularlinse angeordnet sind.

4. Rückblickvorrichtung nach Anspruch 1, dadurch gekennzeichnet, daß die beiden Planreflektoren in dem von der Okularlinse abgehenden Strahlenweg liegen.

5. Rückblickvorrichtung nach den Ansprüchen 2 oder 4, dadurch gekennzeichnet, daß der Planspiegel in dem Strahlenweg zwischen der Objektivlinse und der Okularlinse angeordnet ist.

6. Rückblickvorrichtung nach Anspruch 2 oder 3, dadurch gekennzeichnet, daß der Planspiegel in dem von der Okularlinse wegweisenden Strahlenweg angeordnet ist.

7. Rückblickvorrichtung nach einem oder mehreren der Ansprüche 1 bis 6, gekennzeichnet durch ihre Anordnung in einem Schutzhelm, z.B. für einen Motorradfahrer.

0 007 432

*FIG.1*

*FIG.2*

1

FIG.3